Europäisches Patentamt

European Patent Office

Office européen des brevets

(19)

(11) EP 0 781 621 B1

(12) **FASCICULE DE BREVET EUROPEEN**

(45) Date de publication et mention
de la délivrance du brevet:
**08.04.1998 Bulletin 1998/15**

(51) Int. Cl.⁶: **B23K 26/00**

(21) Numéro de dépôt: **96119608.6**

(22) Date de dépôt: **06.12.1996**

(54) **Procédé d'épissure de bandes métalliques et machine pour sa mise en oeuvre**

Verfahren zum Spleissen von metallischen Bändern und Maschine zur Durchführung des Verfahrens

Process for splicing of metallic bands and machine therefor

(84) Etats contractants désignés:
**AT CH DE FI IT LI**

(30) Priorité: **18.12.1995 FR 9514964**

(43) Date de publication de la demande:
**02.07.1997 Bulletin 1997/27**

(73) Titulaire: **E. KERTSCHER S.A.**
**CH-1462 Yvonand (CH)**

(72) Inventeur: **Buluschek, Bruno**
**1026 Echandens (CH)**

(74) Mandataire:
**Thérond, Gérard Raymond et al**
**I C B**
**Ingénieurs Conseils en Brevets SA**
**Rue des Sors 7**
**2074 Marin (CH)**

(56) Documents cités:
**US-A- 3 191 843**

• **PATENT ABSTRACTS OF JAPAN vol. 008, no.**
**158 (M-311), 21 Juillet 1984 & JP 59 054489 A**
**(AISHIN SEIKI KK), 29 Mars 1984,**

## Description

La présente invention concerne un procédé d'épissure de bandes métalliques, ainsi qu'une machine pouvant être incorporée dans une chaîne de production pour effectuer avec un haut degré d'automatisation les opérations de découpe et de soudure, en faisant uniquement appel à la technique par rayon laser pour toutes les opérations devant être effectuées sur les bandes à épisser.

Les bandes métalliques, nues ou revêtues d'un polymère de protection sur une face ou sur les deux, sont d'un usage très courant dans la fabrication des câbles, afin d'en assurer le gainage ou l'armure, ainsi que dans la fabrication de tubes. Sous forme lisse ou ondulée, selon leur destination finale, elles permettent, par exemple de procurer un blindage électromagnétique ou électronique, de permettre le transport du courant de court-circuit, ou d'augmenter leur résistance aux agressions extérieures (écrasement, percement, corrosion, etc...) et aux attaques des rongeurs.

Pour les transformations ultérieures, et compte tenu de la destination finale, il peut être nécessaire de disposer de tels câbles, ou tubes, dans des longueurs supérieures à la longueur des rouleaux de bandes métalliques disponibles comme matière première, ou au contraire dans des longueurs inférieures. Afin d'éviter des pertes inutiles, il est donc souvent nécessaire d'effectuer en cours de production une épissure, soit pour obtenir la longueur désirée, soit pour ne pas mettre au rebut des longueurs importantes de bande. Selon la technique en vigueur, cette opération d'épissure s'effectue en utilisant d'abord une machine de coupe pour avoir des extrémités de bande finissante et de bande commençante nettes, puis avec une machine de soudage permettant par exemple la soudure par points, la soudure par ultrasons, la soudure par friction ou le collage. Dans le cas où la bande métallique comporte en outre un revêtement en polymère, il est nécessaire d'effectuer une opération supplémentaire de décapage de la zone à souder, soit de façon manuelle par intervention d'un opérateur, soit au moyen d'une autre machine à grattoir. On observe donc que les procédés actuellement utilisés pour effectuer des épissures de bandes métalliques exigent de disposer d'un parc important de machines-outils différentes pour effectuer les opérations de décapage, de découpage et de soudage, ainsi que d'un personnel assez nombreux pour conduire et surveiller la marche desdites machines-outils.

L'invention a donc pour but principal de fournir un procédé permettant de réaliser les opérations d'épissure susmentionnées d'une façon économiquement plus avantageuse, grâce à la réduction du nombre de machinesoutils et à la diminution du personnel nécessaire pour en assurer le fonctionnement.

L'invention a également pour objet une machine-outil incorporée dans une chaîne de fabrication, faisant appel à la technique laser pour effectuer sur un même poste de travail la découpe d'une bande finissante, la découpe d'un début de bande, le soudage des deux bandes bout à bout et le décapage éventuel d'un revêtement polymère.

A cet effet, l'invention a pour objet un procédé d'épissure d'une bande métallique d'épaisseur $e$ dans une chaîne de production de câbles ou de tubes comprenant en amont un dévidoir double supportant deux bobines de bandes, en aval au moins un accumulateur, et entre les deux une unité multifonctionnelle à rayons laser programmable comprenant une machine-outil pourvue d'une tête de soudage laser, mobile selon trois axes x, y, z au-dessus d'une table comprenant en amont un étau fixe et en aval un étau mobile, caractérisé en ce qu'il comprend les étapes consistant à :

a) régler les caractéristiques du faisceau laser, et son déplacement dans un plan parallèle à ladite table pour obtenir une découpe de la bande selon une ligne parallèle aux bords en regard des mâchoires des étaux, ladite découpe ayant une largeur $l$ dans le sens de défilement et formant avec celui-ci un angle $\alpha$ différent de 90°;

b) immobiliser la fin de bande de la première bobine dans les étaux, découper l'extrémité de la bande selon la ligne de découpe, déplacer l'étau mobile en aval, et ouvrir l'étau fixe pour éliminer la fin de bande;

c) positionner et immobiliser le début de bande de la deuxième bobine dans l'étau fixe, en découper l'entame selon la même ligne de découpe que précédemment et l'éliminer;

d) rapprocher l'étau mobile d'une distance l-$\varepsilon$ en amont de sa position initiale, $\varepsilon$ représentant la distance entre les deux extrémités de bande mises bout à bout;

e) régler les caractéristiques du faisceau laser pour obtenir une soudure

f) déplacer la tête d'une distance (l-$\varepsilon$)/2 en amont de sa position initiale, et

g) effectuer la soudure selon la ligne de jonction des bandes et ouvrir les deux étaux pour libérer la bande.

Lorsque la bande à épisser comporte en outre un revêtement polymère d'une épaisseur relativement importante du côté où la soudure doit être effectuée, le procédé ci-dessus est précédé d'une opération de décapage dans la zone à souder en effectuant les réglages appropriés des caractéristiques du faisceau laser de façon analogue aux réglages effectués dans les étapes a) ou e). Ces réglages peuvent être mis en mémoire pour divers types de bande à épisser grâce aux circuits électroniques d'une armoire de commandes. Dans ce qui précède l'expression "caractéristiques du faisceau laser" désigne, pour un générateur laser donné, les paramètres usuels sur lesquels on peut agir pour en modifier la puissance, à savoir la tension appliquée, la durée et la fréquence des impulsions desquels dépend, en coopération avec la focalisation du cône du rayon laser sur une cible et la vitesse de son déplacement au-dessus de ladite cible, l'aptitude du faisceau laser à produire un décapage, une découpe ou une soudure, comme cela sera exposé plus en détails dans un exemple de réalisation.

Les déplacements de la tête du laser dans le plan parallèle à la surface de bande et ceux de l'étau mobile dans le sens défilement de la bande peuvent également être mis en mémoire.

Toutefois, selon un mode de réalisation préféré, les déplacements de la tête et de l'étau mobile dans le sens du défilement de la bande, de la position de décapage ou de découpe à la position de soudure, sont ajustés au moyen de cales d'épaisseur mises en place au moyen de petits vérins pneumatiques dans l'étape de découpe ou de décapage, et retirés dans l'étape de soudure. Ces cales ont une épaisseur telle qu'elles permettent après retrait, le déplacement amont de l'étau mobile d'une valeur l-ε par rapport à sa position initiale, et celui de la tête d'une valeur (l-ε)/2, de façon à ce que le déplacement de la tête pour effectuer la soudure ait lieu très précisément entre les deux bords de bande. Lorsque les extrémités de bande sont parfaitement jointives, ces valeurs sont respectivement l et l/2. L'expérience a montré que l'épissure la plus satisfaisante était obtenue lorsque l'écartement ε entre les deux extrémités de bande n'était pas supérieur au dixième de l'épaisseur de la bande

$$(\varepsilon < \frac{e}{10}).$$

La valeur optimale de ε, qui dépend à la fois des réglages au niveau de la puissance du laser, de l'épaisseur de la bande et du métal la constituant, est déterminée lors des essais préalables. Ces essais permettent également de mesurer la valeur de l, et de fixer la valeur de l'angle α qui sera conservé dans les différentes étapes du procédé. L'angle α peut également être fixé à l'avance lors de la construction de la machine-outil. Pour les transformations ultérieures de la bande, par ondulation ou par conformation en tube, l'angle α doit être différent de 90°, et de préférence compris entre 45 et 70°, et encore mieux autour de 68°.

Le déplacement de la tête le long d'une ligne formant un angle α avec le sens de défilement de la bande est avantageusement obtenu au moyen d'un automate programmable (par exemple disponible auprès de la société Siemens) comprenant un chariot motorisé se déplaçant sur des guides entre deux détecteurs de fin de course.

De ce qui précède, il ressort que la largeur même de la bande n'est pas une dimension critique et dépend uniquement du dimensionnement de la machine-outil selon l'invention. Les bandes usuelles ont une largeur pouvant aller jusqu'à 500 mm pour une épaisseur comprise entre 0,05 mm et 1 mm. Il n'y a en principe aucune limitation quant à la nature du métal les constituant. A titre d'exemple, on peut citer les produits suivants, disponibles sur le marché :

- Polilam® (disponible chez Carcano - Côme - Italie) : aluminium recouvert d'un polymère, sur les deux faces);
- Zetabon® (disponible chez Alcan) : acier recouvert d'un polymère sur les deux faces;
- une bande de cuivre recouvert d'un polymère sur une seule face.

L'invention a aussi pour objet une unité multifonctionnelle telle que définie dans la revendication 7.

Comme on le voit, dans un mode de fonctionnement automatique, le procédé d'épissure selon l'invention ne nécessite l'intervention d'un opérateur que pour éliminer les extrémités de bandes et pour positionner une bande commençante, pour laquelle un contrôle visuel est nécessaire afin de pouvoir éliminer une longueur suffisante correspondant à la bande de couverture qui comporte généralement des défauts.

D'autres avantages et caractéristiques de l'invention apparaîtront à la description détaillée qui suit concernant un exemple d'une unité multifonctionnelle à rayon laser programmable permettant de mettre en oeuvre le procédé selon l'invention, en référence aux dessins annexés dans lesquels

- la figure 1 est une représentation simplifiée d'une chaîne à épisser mettant en oeuvre le procédé selon l'invention;
- la figure 2 est une représentation plus détaillée de l'unité multifonctionnelle de la figure 1;
- la figure 3 est une vue de dessus agrandie de la table d'usinage de la figure 2; et
- les figures 4 à 6 sont des représentations schématiques des différentes étapes du procédé.

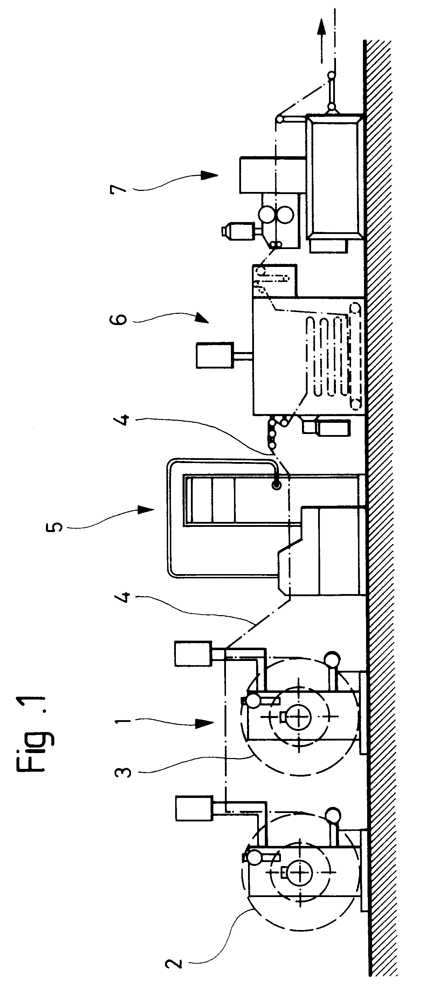

A la figure 1, on a représenté le schéma de principe d'une chaîne de production de câbles ou de tubes permettant de raccorder des bandes métalliques "in line". De l'amont à l'aval, cette chaîne comporte un dévidoir double 1 permettant de supporter une première bobine 2 et une deuxième bobine 3, contenant chacune la même bande à épisser 4 qui alimente une unité multifonctionnelle à rayons laser selon l'invention 5, délivrant à sa sortie une bande 4 dont la longueur est indépendante du contenu de l'une ou l'autre des bobines 2, 3 d'approvisionnement. La bande 4 est reçue dans un accumulateur 6 permettant de poursuivre l'opération de formage de la bande pendant que se déroule un cycle d'épissage. La durée d'un cycle d'épissage, depuis l'arrêt de la bande jusqu'à son démarrage, est comprise entre quelques minutes et moins d'une minute, selon le matériau utilisé. Dans le schéma de la figure 1, le formage est représenté par un onduleur 7. L'unité multifonctionnelle 5 permet donc d'effectuer sur le même poste de travail successivement les opérations de découpe, de soudure, et si nécessaire de décapage. Dans une chaîne selon l'art antérieur, pour accomplir ces mêmes opérations, il serait nécessaire de disposer de plusieurs machines outils différentes, telle qu'une cisaille et un poste de soudure.

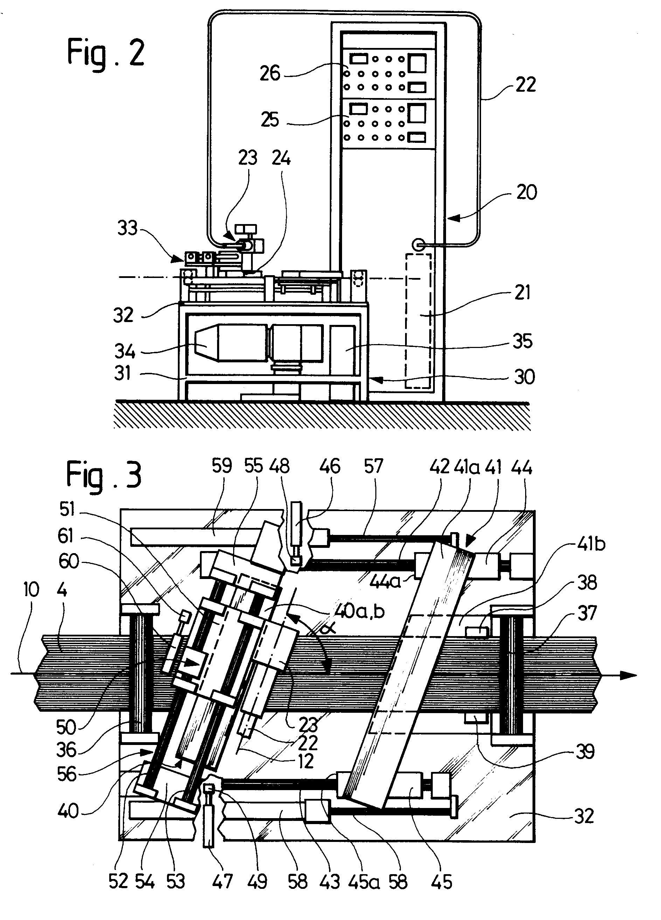

A la figure 2, on a représenté une vue de côté agrandie de l'unité multifonctionnelle 5, essentiellement composée d'une armoire électrique de commande 20 et d'une machine-outil programmable 30. L'armoire 20 abrite notamment un générateur de rayons laser 21 et son circuit de refroidissement (non représenté), ledit générateur 21 étant relié par un câble de fibres optiques 22 à une optique 23 prolongée par une tête 24. La machine-outil 30 comprend un bâti 31 dont le plateau supérieur 32 supporte l'ensemble d'usinage 33 comprenant tous les éléments mécaniques et des commandes pneumatiques décrits plus en détails ci-après. Le bâti 31 permet également de loger un compresseur 34 fournissant un air comprimé initialement à environ 10 bars réglable à 5 bars pour les commandes pneumatiques et à 9 bars pour l'alimentation de la tête 24 afin de permettre l'éjection du métal fondu dans la phase de découpe. Selon une variante, l'air comprimé à 9 bars peut être remplacé par de l'azote sous pression, ce qui offre l'avantage d'éviter tout dépôt de vapeur sur le laser et toute oxydation au niveau de la soudure. Les raccordements de ces fluides sous pression à l'ensemble d'usinage 33 sont effectués d'une façon connue de l'homme de métier par des conduits non représentés sur la figure 2. L'armoire 20 comporte en outre deux pupitres de commande 25, 26 permettant respectivement de régler les caractéristiques énergétique du faisceau laser et de commander les organes mobiles de la machine-outil.

La figure 3 représente une vue de dessus agrandie de l'ensemble d'usinage 33 comprenant une table 32 rectangulaire au-dessus de laquelle s'effectue le défilement selon l'axe 10 d'une bande 4, dont le positionnement est assuré, dans le sens vertical du côté amont par un jeu de rouleaux 36 et du côté aval par un deuxième jeu de rouleaux 37, et dans le plan horizontal par des butées 38, 39, visibles seulement près du jeu de rouleaux 37. La bande 4 peut être immobilisée au-dessus de la table 32 au moyen d'une pression verticale exercée par deux étaux 40, 41 dont les bords en regard forment un angle $\alpha$ avec l'axe 10 de défilement. L'étau amont 40 est un étau fixe composé d'une plaque supérieure 40a pouvant être rapprochée d'une plaque en regard 40b (non visible sur la figure 3) solidaire de la table 32. L'étau aval 41 est un étau mobile composé d'une plaque supérieure 41a pouvant être rapprochée au moyen d'un vérin pneumatique d'un support inférieur 41b, l'ensemble étant représenté dans sa position la plus éloignée de l'étau fixe 40. A partir de cette position, l'étau mobile 41 peut se déplacer en amont sur des guides 42, 43 au moyen de deux vérins pneumatiques 44, 45 dont les extrémités 44a, 45a viennent en butée contre l'étau fixe 40, en déterminant par là même l'écartement entre les bords en regard des étaux 40 et 41, ou de façon équivalente l'écartement entre une extrémité de bande immobilisée dans l'étau fixe 40 et l'extrémité d'une autre bande immobilisée dans l'étau mobile 41. Cet écartement entre les bords des étaux en position rapprochée peut être ajusté, soit en déplaçant le point de fixation de la plaque 41a sur les vérins 44, 45 soit en utilisant des entretoises rendues solidaires des extrémités 44a, 45a desdits vérins, soit encore en fixant un cavalier sur les guides 42, 43. Comme on le verra dans la description du procédé, l'étau mobile doit occuper deux positions rapprochées. A cet effet des petits vérins pneumatiques 46, 47 permettent d'intercaler des cales d'épaisseur 48, 49.

Un dispositif de découpe/soudage par rayon laser 50 comprend l'optique 23 raccordée par la fibre 22 au générateur 21 et prolongée par la tête 24 (non visible sur la figure 3), ledit dispositif étant monté sur un chariot motorisé 51 susceptible de se déplacer sur deux guides 52, 53 pour imprimer à la tête 24 un mouvement parallèle à la ligne de découpe/soudure 12. Les guides 52, 53 forment eux-mêmes avec des plaques supports 54, 55 un chariot mobile 56 susceptible de se déplacer sur des guides 57, 58 parallèles à l'axe 10 de défilement, au moyen de deux vérins 58, 59. Le positionnement du dispositif de découpe 50 le long de l'axe 10 est obtenu de façon analogue au positionnement de l'étau mobile 41, deux positions déterminées pouvant être obtenues par interposition ou suppression d'une cale d'épaisseur 61 au moyen d'un petit vérin pneumatique 60.

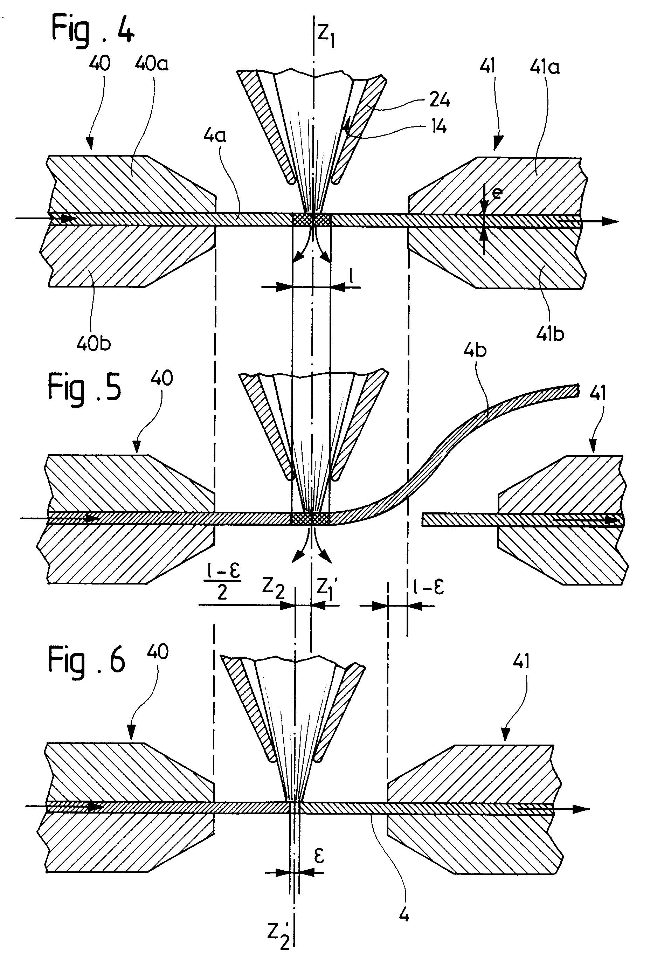

En se référant maintenant aux figures 4 à 6, on a représenté schématiquement en coupe selon l'axe du défilement 10 de la bande les différentes étapes du procédé.

A la figure 4, la bobine 2 se termine et les deux étaux 40, 41, qui occupent une position symétrique par rapport à la tête 24, se referment sur la bande 4. On effectue alors la découpe par rayon laser de la fin de bande 4, qui est éliminé après avoir ouvert l'étau fixe 40.

A la figure 5, on a éloigné l'étau mobile 41 de l'étau fixe 40, puis on a introduit le début de bande de la bobine 3, en laissant dépasser une longueur au moins égale à la bande de couverture comportant généralement des défauts. Apres avoir refermé l'étau fixe, l'extrémité est découpée puis éliminée. Ces deux opérations de découpe sont effectuées sans modifier les paramètres du dispositif de découpe 50, tant en ce qui concerne la position du chariot supportant la tête 24 que les caractéristiques de puissance du faisceau laser.

Avec un laser Na:YA6, de longueur d'onde 780 nm on choisit une durée d'impulsion courte, comprise entre 0,30 et 0,45 ms et une tension relativement élevée, comprise entre 500 et 600 V, en focalisant le cône du faisceau laser sur la surface de la bande, par réglage de la distance focale de l'optique 23. Ce réglage est effectué au moyen d'essais préalables de perforations, l'extrémité de la tête 24 étant à une distance de l'ordre de 0,3 mm par rapport à la surface de la bande. Comme on le voit sur les figures 4 et 5, la découpe fond le métal selon l'axe $Z_1 Z'_1$ sur une largeur $\underline{l}$, le métal fondu étant chassé par un jet 14 sous pression d'air comprimé ou d'azote. Cette largeur $\underline{l}$ a également été mesurée avec précision lors d'essais préalables de façon à déterminer le calibre des cales d'épaisseur 47, 48, 61 mise en place préalablement à ces opérations de découpe, mais non représentées sur les schémas des figures 4 et 5.

Dans le cas où la bande comporte un revêtement polymère assez épais, chaque opération de découpe doit être précédée d'une phase de décapage, en maintenant tous les réglages précédents, à l'exception de la puissance de faisceau laser qui est diminué en donnant aux impulsions une durée plus longue et en réduisant proportionnellement la tension, tout en maintenant la fréquence des impulsions et la vitesse d'avance du chariot motorisé 50.

La figure 6 représente la phase de soudage bout à bout de l'extrémité de bande commençante avec l'extrémité de bande finissante, un espace de largeur $\varepsilon$ étant laissé entre les deux extrémités. Dans cette étape du procédé les cales d'épaisseur 47,48,61 ont été retirées au moyen des petits vérins pneumatiques 46, 47, 60 représentés à la figure 3. La tête 24 est alors positionnée selon un axe $Z_2 Z'_2$ en amont de l'axe $Z_1 Z'_1$ à une distance $(l - \varepsilon)/2$, mesurée selon l'axe 10 de défilement de la bande 4. De façon analogue, l'étau mobile 41 occupe alors une position en amont de sa position initiale, représentée à la figure 4, à une distance $l - \varepsilon$. Pour effectuer la soudure, on impose alors d'autres caractéristiques de puissance au faisceau laser en choisissant une durée d'impulsion comprise entre 1 et 2,5 ms et en ajustant la tension de façon à obtenir un cordon de soudure continu entre toute l'épaisseur de la bande. A cet effet on agit également sur la fréquence des impulsions et sur la vitesse d'avance du chariot motorisé. Comme cela a déjà été indiqué, tous ces paramètres peuvent être mis en mémoire ce qui évite de refaire tous ces essais et tous ces réglages lorsque les mêmes types de bandes doivent être soudés. Une fois la soudure effectuée, les deux étaux 40, 41 sont ouverts pour permettre le libre déroulement de la bande.

De la description précédente, il ressort que l'homme de métier est en mesure d'effectuer les essais et réglages appropriés pour effectuer des épissures sur des bandes de dimensions quelconques, quelle que soit la nature du métal formant la bande ou la nature du polymère la recouvrant.

**Revendications**

1. Procédé d'épissure de bandes métalliques (4) d'épaisseur e dans une chaîne de production de câbles ou de tubes comprenant en amont un dévidoir double supportant deux bobines (2, 3) de bandes, en aval au moins un accumulateur (6), et, entre les deux, une unité multifonctionnelle (5) à rayons laser programmable comprenant une machine-outil (30) pourvue d'une tête de soudage laser (24), mobile selon trois axes x, y, z au-dessus d'une table (32) comprenant en amont un étau fixe (40) et en aval un étau mobile (41), caractérisé en ce qu'il comprend les étapes consistant à :

   a) régler les caractéristiques du faisceau laser et son déplacement dans un plan parallèle à ladite table (32) pour obtenir une découpe de la bande (4) selon une ligne de coupe (12) parallèle aux bords en regard des mâchoires des étaux (40, 41), ladite découpe ayant une largeur l dans le sens de défilement et formant avec celui-ci un angle $\alpha$ différent de 90°C;
   b) immobiliser la fin de bande de la première bobine (2) dans les étaux (40, 41), découper l'extrémité de la bande selon la ligne de coupe (12), déplacer l'étau mobile (41) en aval, et ouvrir l'étau fixe (40) pour éliminer la fin de bande;
   c) positionner et immobiliser le début de bande de la deuxième bobine (3) dans l'étau fixe (40), en découper l'entame selon la même ligne de découpe (12) que précédemment et l'éliminer;
   d) rapprocher l'étau mobile (41) d'une distance $1-\varepsilon$ en amont de sa position initiale, $\varepsilon$ représentant la distance entre les deux extrémités de bande mises bout à bout.
   e) régler les caractéristiques du faisceau laser pour obtenir une soudure
   f) déplacer la tête (24) d'une distance $(l - \varepsilon)/2$ en amont de sa position initiale, et
   g) effectuer la soudure selon la ligne de jonction des bandes et ouvrir les deux étaux (40, 41) pour libérer la bande (4).

2. Procédé d'épissure selon la revendication 1, caractérisé en ce qu'il comprend, préalablement à chaque opération de découpe une opération de décapage permettant d'éliminer un revêtement polymère de la surface de la bande (4), ledit décapage étant obtenu en modifiant les caractéristiques du faisceau laser.

3. Procédé d'épissure selon les revendications 1 ou 2, caractérisé en ce que les réglages des caractéristiques du faisceau laser, pour les opérations de décapage, de découpe et de soudure sont mémorisées pour chaque bande métallique (4) d'épaisseur e donnée.

4. Procédé d'épissure selon les revendications 2 ou 3, caractérisé en ce que le déplacement de l'étau mobile (41) d'une distance $l - \varepsilon$ et celui de la tête (24) d'une distance $(l - \varepsilon)/2$ sont ajustés au moyen de cales d'épaisseur (48, 49, 61) mises en place ou retirées au moyen de vérins pneumatiques (46, 47, 60)

5. Procédé d'épissure selon la revendication 1, caractérisé en ce que l'angle $\alpha$ a une valeur comprise entre 45° et 70°, de préférence 68°.

6. Procédé d'épissure selon la revendication 1, caractérisé en ce que le déplacement de la tête (24) parallèlement à la ligne de coupe (12) est obtenu au moyen d'un automate motorisé programmable.

7. Unité multifonctionnelle (5) à rayons laser programmable pour épisser des bandes métalliques (4) comprenant une machine outil (30) pourvue d'une tête de soudage laser (24) mobile selon trois axes x, y, z audessus d'une table (32) comprenant en amont, un étau fixe (40) et en aval un étau mobile (41), caractérisée en ce que les mâchoires des étaux (40, 41) forment un angle $\alpha$ différent de 90° avec l'axe de défilement de la bande métallique (4), en ce que la puissance du faisceau laser peut être ajusté pour effectuer des opérations de décapage, de découpe et de soudure, et en ce que des cales d'épaisseurs (48, 49, 61) interposées au moyen de vérins pneumatiques (46, 47, 60) permettent de contrôler le déplacement amont de l'étau mobile (41) et de la tête (24) depuis une position de décapage ou de découpe jusqu'à une position de soudure.

**Claims**

1. Method for joining end to end metal strips (4) having a thickness e in a cable or tube production line comprising, upstream, a double uncoiler supporting two coils storing strips (2, 3), downstream, at least one accumulator (6), and therebetween a programmable multifunctional laser beam unit (5) comprising a machine-tool provided with a laser welding head (24), mobile along three axes above a table (32) comprising upstream, a stationary clamp (40) and downstream a mobile clamp (41), characterised in that it comprises the following steps:

    a) setting the characteristics of the laser beam and its movement in a plane parallel to said table (32) to cut the strip (4) along a cutting line (12) parallel to the edges facing the jaws of the clamps (40,41) said cut having a width I in the direction of motion and forming with the latter an angle $\alpha$ different from 90°C;
    b) immobilising the end portion of the strip of the first coil (2) in the clamps (40, 41), cuting the end of the strip along the cutting line (12) and opening the stationary clamp to remove the end of the strip;

    c) positioning and immobilising the beginning of the strip of the coil (3) in the stationary clamp (40), cutting the first cut along the same cutting line (12) as previously and removing it;
    d) bringing the mobile clamp (41) closer by a distance of 1-$\varepsilon$ upstream of its initial position, $\varepsilon$ representing the distance between the two ends of the strips put end to end;
    e) setting the characteristics of the laser beam so as to obtain a weld seam;
    f) moving the head (24) by a distance (1-$\varepsilon$)/2 upstream of its initial position, and
    g) welding along the junction line of the strips and opening the two clamps (40, 41) to release the strip (4).

2. Joining method according to claim 1, characterised in that it comprises, prior to each cutting step, a cleaning step allowing the removal of a polymer coating from the surface of the strip (4), said cleaning being achieved by changing the characteristics of the laser beam (4).

3. Joining method according to claims 2 or 3, characterised in that the laser beam characteristic settings, for the cleaning, cutting and welding steps are memorised for each metal strip (4) of a given thickness e.

4. Joining method according to claims 2 or 3, characterised in that the displacement of the mobile clamp (41) by a distance 1-$\varepsilon$ and the displacement of the head (24) by a distance (1-$\varepsilon$)/2 are set by means of distance pieces (48, 49, 61) put into place or removed by means of pneumatic jacks (46, 47, 60)

5. Joining method according to claim 1, characterised in that angle $\alpha$ has a value comprised between 45° and 70°, preferably 68°.

6. Joining method according to claim 1, characterised in that the displacement of the head (24) parallel to the cutting line (12) is obtained by means of a programmable motorised automatic machine

7. Programmable multifunctional laser beam unit (5) for joining end to end metal strips (4) comprising a machine-tool (30) provided with a laser welding head (24) mobile along three axis x, y, z above a table (32) comprising upstream a stationary clamp (40) and downstream a mobile clamp (41), characterised in that the jaws of the clamps (40, 41) form an angle $\alpha$ different from 90° with the direction of motion of the metal strip (4), in that the power of the laser beam can be set to effect cleaning, cutting and welding steps and in that distance pieces (48, 49, 61) interposed by means of pneumatic jacks (46, 47, 60) allow the upstream displacement of the mobile clamp (41) and the head (24) from a cleaning or cutting position to a welding position to be controlled.

## Patentansprüche

**1.** Verfahren zum Spleißen von Metallbändern (4) der Dicke e in einer Fertigungsstraße für Kabel oder Rohre, umfasend stromauf eine Doppelhaspel zur Abstützung von zwei Bobinen (2, 3) von Bändern, mindestens einen stromab liegenden Sammler (6) und zwischen beiden eine multifunktionelle programmierbare Laserstrahl-Funktionseinheit (5) mit einer Werkzeugmaschine (30), versehen mit einem Laserschweißkopf (24), der oberhalb eines Tisches (32) mit einer stromauf liegenden festen Spannvorrichtung (40) und einer stromab liegenden beweglichen Spannvorrichtung (41) längs drei Achsen x, y, z beweglich ist, dadurch gekennzeichnet, daß es umfaßt:

a) Regeln der Charakteristiken des Laserstrahls und seiner Verlagerung in einer Ebene parallel zu dem Tisch (32), um einen Schnitt des Bandes (4) längs einer Schnittlinie (12) parallel zu den Rändern gegenüber den Bakken der Spannvorrichtungen (40, 41) vorzunehmen, welcher Schnitt eine Breite I in Vorschubrichtung hat und mit dieser einen von 90° verschiedenen Winkel $\alpha$ bildet,
b) Stillsetzen des Endes des Bandes von der ersten Bobine (2) in den Spannvorrichtungen (40, 41), Abschneiden des Endes des Bandes längs der Schnittlinie (12), Stromabverlagern der beweglichen Spannvorrichtung (41), und öffnen der festen Spannvorrichtung (40) zum Eliminieren des Endes des Bandes,
c) Positionieren und Stillsetzen des Anfangs des Bandes von der zweiten Bobine (3) in der festen Spannvorrichtung (40), wobei der Anschnitt längs derselben Schnittlinie (12) wie vorher abgetrennt und eliminiert wird,
d) Annähern der beweglichen Spannvorrichtung (41) um eine Distanz 1-$\varepsilon$ nach stromauf bezüglich ihrer Ausgangsposition, wobei $\varepsilon$ die Distanz zwischen den beiden aneinanderstoßenden Bandenden repräsentiert,
e) Regeln der Charakteristiken des Laserstrahls, um eine Schweißung zu erzielen,
f) Verlagern des Kopfes (24) um eine Distanz (1-$\varepsilon$)/2 aus seiner Ausgangsposition nach stromauf, und
g) Vornehmen der Schweißung längs der Stoßstelle der Bänder und Öffnen der beiden Spannvorrichtungen (40, 41) zum Freisetzen des Bandes (4).

**2.** Spleißverfahren nach Anspruch 1, dadurch gekennzeichnet, daß es vor jedem Schnittvorang eine Abtragoperation umfaßt, die es ermöglicht, eine Polymerbeschichtung von der Oberfläche des Bandes (4) zu entfernen, welche Abtragoperation unter Modifikation der Charakteristiken des Laserstrahls vorgenommen wird.

**3.** Spleißverfahren nach Anspruch 1 oder 2, dadurch gekennzeichnet, daß die Regelungen der Charakteristiken des Laserstrahls für die Arbeitsgänge des Abtragens, Schneidens und Schweißens für jedes Metallband (4) gegebener Dicke e abgespeichert werden.

**4.** Spleißverfahren nach Anspruch 2 oder 3, dadurch gekennzteichnet, daß die Verlagerung der beweglichen Spannvorrichtung (41) um eine Distanz 1-$\varepsilon$ und jene des Kopfes (24) um eine Distanz (1-$\varepsilon$)/2 mittels Dickenpaßstücken (48, 49, 61) eingestellt werden, die mittels pneumatischer Arbeitszylinder (46, 47, 60) plaziert oder zurückgezogen werden.

**5.** Spleißverfahren nach Anspruch 1, dadurch gekennzeichnet, daß der Winkel $\alpha$ einen zwischen 45° und 70° liegenden Wert, vorzugsweise 68°, hat.

**6.** Spleißverfahren nach Anspruch 1, dadurch gekennzeichnet, daß die Verlagerung des Kopfes (24) parallel zur Schnittlinie (12) mittels eines programmierbaren motorisierten Automaten vorgenommen wird.

**7.** Programmierbare multifunktionelle Laserstrahleinheit (5) zum Spleißen von Metallbändern (4), umfassend eine Werkzeugmaschine (30), versehen mit einem Laserschweißkopf (24), der über einem stromauf mit einer festen Spannvorrichtung (40) und stromab mit einer beweglichen Spannvorrichtung (41) versehenen Tisch (32) längs drei Achsen x, y, beweglich ist, dadurch gekennzeichnet, daß die Backen der Spannvorrichtungen (40, 41) mit der Vorschubachse des Metallbandes (4) einen von 90° verschiedenen Winkel $\alpha$ bilden, daß die Leistung des Laserstrahls einstellbar ist, um Arbeitsgänge des Abtragens, des Schneidens und des Schweißens auszuführen, und daß mittels pneumatischer Arbeitszylinder (46, 47, 60) eingefügte Dickenpaßstücke (48, 49, 61) die Steuerung der Stromaufverlagerung der beweglichen Spannvorrichtung (41) und des Kopfes (24) aus einer Abtrag- oder Schneideposition in eine Schweißposition ermöglichen.

Fig .1

Fig . 2

Fig . 3

Fig. 4

$Z_1$

40  40a  4a  24  14  41  41a

e

l

40b  41b

Fig. 5  40  4b  41

$\frac{l-\varepsilon}{2}$  $Z_2$  $Z_1'$  $l-\varepsilon$

Fig. 6  40  41

$\varepsilon$

4

$Z_2'$